# EUROPEAN PATENT SPECIFICATION

(11) **EP 1 876 277 B1**
(45) Date of publication and mention of the grant of the patent: **29.02.2012**
(21) Application number: 06732296.6
(22) Date of filing: 24.04.2006
(51) Int. Cl.: D04H 13/00, B32B 5/26, B32B 5/04, A61F 13/15, B32B 25/10

(54) **NONWOVEN STRETCH FABRIC AND PROCESS FOR PRODUCING THE SAME**
STRETCHVLIESSTOFF UND HERSTELLUNGSVERFAHREN DAFÜR
TISSU EXTENSIBLE NON TISSÉ ET PROCÉDÉ DE FABRICATION IDOINE

(30) Priority: 25.04.2005 JP 2005127188; 22.09.2005 JP 2005276604; 21.10.2005 JP 2005307721
(43) Date of publication of application: 09.01.2008
(73) Proprietor: Kao Corporation, Chuo-Ku Tokyo 103-8210 (JP)
(72) Inventor: MASUKI, Tetsuya c/o Kao Corporation, Research Lab.., Haga-gun, Tochigi;3213497 (JP); KANAZAWA, Koji c/o Kao Corporation, Research Lab., Haga-gun, Tochigi;3213497 (JP); KOBAYASHI, Hideyuki c/o Kao Corporation, Research, Haga-gun, Tochigi;3213497 (JP); GUNJI, Akihiko c/o Kao Corporation, Research Lab., Haga-gun, Tochigi; 3213497 (JP); MIYAMURA, Takeshi c/o Kao Corporation, Research La, Tochigi;3213497 (JP)
(74) Representative: Vossius & Partner
(86) International application number: PCT/JP2006/308586
(87) International publication number: WO 2006/115251

(56) References cited:
- EP-A- 0 333 212
- EP-A- 1 510 334
- WO-A-97/34037
- WO-A-03/076179
- JP-A- 09 117 982
- JP-A- 2002 187 228
- JP-A- 2004 166 832
- JP-A- 2005 089 870
- JP-B2- 03 064 157
- JP-B2- 43 030 017
- JP-U- 63 081 887
- US-A- 5 470 639
- US-A1- 2004 067 710

## Description

The present invention relates to a stretch nonwoven fabric and a process of producing the same. It also relates to a process of producing an article having a stretch portion and including a stretch nonwoven fabric.

### Background Art

Known composite stretch nonwoven fabrics composed of nonwoven fabric and an elastic fiber layer include one having a staple fiber layer as a surface layer (see U.S. Patent 4,107,364). Using stable fiber in the surface layer easily creates fuzz and tends to reduce the hand of the stretch nonwoven fabric. In order to prevent surface fuzz creation, stretch nonwoven fabric could be produced by first partially bonding a nonwoven fabric and an elastic fiber layer by means of an adhesive or a hot roller and then mechanically stretching the composite to develop stretchability. In this case, however, delamination occurs in the bonds, and the bonds become hard, also reducing the hand.

To increase the bond strength between a nonwoven fabric and an elastic fiber layer thereby to prevent delamination, it has been proposed that the nonwoven fabric and the elastic fiber layer are intermingled by hydroentanglement, subjected to a through-air thermal treatment, and then mechanically stretched for stretchability development (see U.S. Patent 5,324,580). However, if the nonwoven fabric and the elastic fiber layer are joined sufficiently to completely prevent surface fuzzing according to this technique, the fibers will be densified and compacted in the web thickness direction, resulting in damage to the hand. The fibers of the elastic fiber layer come out of the surface of the stretch nonwoven fabric as a result of hydroentanglement, and the stickiness inherent to the elastic material ruins the hand of the stretch nonwoven fabric. Additionally, the thermal treatment deforms the elastic fiber layer into a substantially non-fibrous structure (cohesive film-like structure) so that the stretch nonwoven fabric has reduced breathability as a whole.

U.S. Patent 6,531,014 proposes a process of making a stretchable sheet comprising superposing an inelastically stretchable web on both sides of an elastically stretchable web, intermittently joining the webs by heat-sealing, ultrasonic-sealing, needle punching or hydroentanglement, and stretching the composite uniaxially. This process has the same problems as associated with the aforementioned techniques.

US Patent Application 2004/0067710A1 discloses an elastic composite nonwoven fabric composed of an elastic nonwoven fabric and at least one of other nonwoven fabrics, films, webs, woven fabrics, knitted fabrics, and fiber bundles. The elastic nonwoven fabric comprises elastomeric continuous fibers and non-elastomeric fibers. The publication mentions that the elastic nonwoven fabric and a carded or air-laid fiber web may be bonded by hydroentanglement, point bonding or through-air bonding. The technique disclosed is purposed to prevent blocking of an elastic nonwoven fabric web when unrolled. The publication mentions that the elastic nonwoven fabric may be combined with a thin web of fine non-elastomeric fiber for that purpose. The publication is silent, however, on a structure in which part of the thin web of fine non-elastomeric fiber enters the elastic nonwoven fabric and/or part of the elastic nonwoven fabric enters the thin web of fine non-elastomeric fiber. The elastic nonwoven fabric is insufficient in terms of stretchability, strength (to be obtained by interfiber fusion bonding), non-fuzzing properties, breathability, and soft and airy feel to the touch.

### Disclosure of the Invention

The present invention provides a stretch nonwoven fabric according to claim 1.

The present invention also provides a process of producing a stretch nonwoven fabric according to claim 7.

The present invention also provides a process of producing an article having a stretch portion according to claim 11.

The invention also provides another process of producing an article having a stretch portion according to claim 12.

### Brief Description of the Drawing

Fig. 1 is a schematic cross-section of an embodiment of the stretch nonwoven fabric according to the invention.
Fig. 2 is a schematic illustration of a preferred form of apparatus that can be used to produce the stretch nonwoven fabric of Fig. 1.
Fig. 3 is a plan of an example of a fibrous sheet that is to be stretched.
Fig. 4(a) is a cross-section of the fibrous sheet of Fig. 3, taken along line a-a parallel to the CD.
Fig. 4(b) is a cross-section corresponding to Fig. 4(a), in which the fibrous sheet has been deformed (stretched) between corrugated rollers.
Fig. 4(c) is a cross-section of the fibrous sheet of Fig. 3, taken along line c-c parallel to the CD.
Fig. 4(d) is a cross-section corresponding to Fig. 4(c), in which the fibrous sheet has been deformed (stretched) between corrugated rollers.
Fig. 5 schematically illustrates another stretching unit that can be used in the apparatus shown in Fig. 2.

### Detailed Description of the Invention

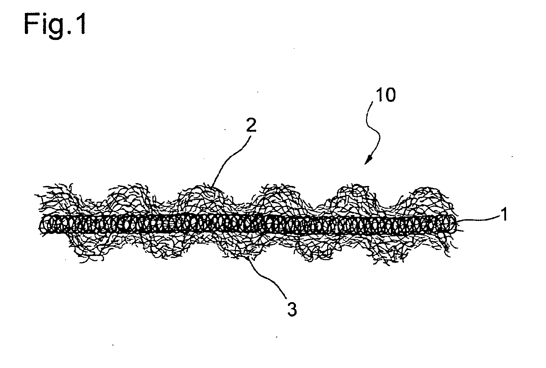

The present invention will be described based on its preferred embodiments with reference to the accompanying drawings. Fig. 1 is a schematic cross-section of one embodiment of the stretch nonwoven fabric according to the invention. A stretch nonwoven fabric 10 of the present embodiment is composed of an elastic fiber layer 1 and inelastic fiber layers 2 and 3 having substantial inelasticity, which may be the same or different, on respective sides of the elastic fiber layer 1.

The elastic fiber layer 1 and the inelastic fiber layer 2 and 3 are joined over the entire area to each other by fusion bonding at fiber intersections while the constituent fibers of the elastic fiber layer 1 remain in the fibrous form. That is, the stretch nonwoven fabric of the invention is different from a conventional one in the manner of joining between superposed webs, because the webs are joined partially in the conventional nonwoven fabric. In the stretch nonwoven fabric 10 of the present embodiment in which the elastic fiber layer 1 is joined all over the entire area to the inelastic fiber layers 2 and 3, the fibers constituting the elastic fiber layer 1 and the fibers constituting each of the inelastic fiber layers 2 and 3 are fusion bonded to each other at their intersections on and near the interfaces between the elastic fiber layer 1 and each of the inelastic fiber layers 2 and 3. Thus, the fiber layers 1, 2, and 3 are joined together substantially entirely over their interfaces. Being joined entirely, the inelastic fiber layers 2 and 3 are each prevented from separating from the elastic fiber layer 1 (delamination) and forming a gap therebetween. If delamination occurs, the elastic fiber layer and the inelastic fiber layers lose integrity, tending to deteriorate the hand of the stretch nonwoven fabric 10. The present invention thus provides stretch nonwoven fabric having a multilayer structure and yet exhibiting integrity like a monolithic nonwoven web.

By the expression "the constituent fibers of the elastic fiber layer 1 remain in the fibrous form" or an equivalent expression as used herein is meant that most of the fibers constituting the elastic fiber layer 1 are not in a cohesive film-like state or a cohesive film-like/fibrous mixed state even after application of heat, pressure and so forth. With the fibers of the elastic fiber layer 1 remaining in a fibrous form, the stretch nonwoven fabric 10 of the present embodiment is assured of sufficient breathability unlike the stretch nonwoven fabric disclosed in U.S. Patent 5,324,580 *supra.* As will be described later, the stretch nonwoven fabric 10 of the present embodiment has bonds 4 as a result of heat embossing. The fibers of the elastic fiber layer 1 in the bonds 4 can take a film-like/fibrous mixed state, which depends on the heat embossing conditions. Accordingly, whether the fibers of the elastic fiber layer 1 remain in the fibrous form should be judged with reference to the site other than the bonds 4.

The elastic fiber layer 1 has its fibers fusion bonded at their intersections throughout its thickness. Likewise, both the inelastic fiber layers 2 and 3 have their fibers fusion bonded at their intersections throughout their thickness.

At least one of the inelastic fiber layers 2 and 3 has part of its constituent fibers enter the elastic fiber layer 1 and/or the elastic fiber layer 1 has part of its constituent fibers enter at least one of the inelastic fiber layers 2 and 3. Such an intermingling state secures the integrity between the elastic fiber layer 1 and the inelastic fiber layers 2 and 3 to effectively prevent delamination. As a result, the layers are interlocked in conformity to their respective surface shapes. Some of the fibers constituting one of the inelastic fiber layers and entering the elastic fiber layer 1 are confined within the thickness of the elastic fiber layer 1, and some others penetrate through the elastic fiber layer 1 into the opposite inelastic fiber layer. For example, part of the fibers constituting the elastic fiber layer 1 go through a macroscopic imaginary plane connecting fibers existing on the surface of the inelastic fiber layer 2 (or 3) facing the elastic fiber layer 1 and enter the interfiber spaces beyond the imaginary plane. Part of the fibers constituting the inelastic fiber layer 2 (or 3) go through a macroscopic imaginary plane connecting fibers existing on the surface of the elastic fiber layer 1 facing the inelastic fiber layer 2 (or 3) and enter the interfiber spaces between the two opposing imaginary planes. It is particularly preferred that the fibers of the inelastic fiber layer entering and staying within the elastic fiber layer 1 are entangled with the fibers constituting the elastic fiber layer 1. Likewise, it is particularly preferred that the fibers of one of the inelastic fiber layers penetrating through the elastic fiber layer 1 into the other inelastic fiber layer are entangled with the fibers constituting the other inelastic fiber layer. Such an entangled state of fibers can be confirmed by substantially no spaces left in the interfaces between the fiber layers under SEM or microscopic observation. As used herein, the term "entangled" means a state of fibers being in sufficient entanglement with each other and does not include a state of fibers of the layers merely stacked on each other. Whether or not fibers are entangled can be judged by, for example, the following method. Two fiber layers are merely stacked on each other, and a force required to separate them apart is measured. Separately, the two fiber layers are stacked, air is blown through the stack (through-air technique) without causing fusion bonding, and a force required to separate the stack into the individual layers is measured. When there is a substantial difference between the two forces measured, the fibers of the air-blown layers can be said to be entangled with each other.

In order to have the fibers of the inelastic fiber layer enter the elastic fiber layer and/or to have the fibers of the elastic fiber layer enter the inelastic fiber layer, it is desirable that at least one of the inelastic fiber layer and the elastic fiber layer is in the form of a web, i.e., a loose aggregate of fibers (having no fusion bonds) before the step of fusion bonding the fibers of the inelastic fiber layer and the fibers of the elastic fiber layer. To help fibers of a layer to enter another layer, it is desirable that the web is made up of staple fibers for higher freedom of movement than continuous fibers.

A through-air technique is a preferred process for having the fibers of the inelastic fiber layer enter the elastic fiber layer 1 and/or having the fibers of the elastic fiber layer enter the inelastic fiber layer. A through-air technique easily achieves having fibers of a layer enter another layer facing thereto and having a layer receive fibers from another layer facing thereto. A through-air technique easily achieves having the fibers of the inelastic fiber layer enter the elastic fiber layer 1 while retaining the bulk of the inelastic fiber layer. A through-air technique is also preferred for having the fibers of one of the inelastic fiber layers penetrate through the elastic fiber layer 1 into the other inelastic fiber layer. It is particularly preferred that an inelastic fiber layer in the form of a web is superposed on each side of an elastic fiber layer and that the resulting stack is subjected to a through-air technique. In this case, the fibers constituting the elastic fiber layer may or may not be fusion bonded to each other. As will be described later with respect to the production of the stretch nonwoven fabric, the uniformity of the fibers' entrance into the adjacent fiber layer can be increased by controlling the conditions of carrying out the through-air technique and by improving permeability of hot air through the stretch nonwoven fabric, especially the elastic fiber layer. Processes other than the through-air technique, e.g., blowing steam, are useful as well. Hydroentanglement and needle punching are also employable, but it should be noted that these processes tend to impair the bulkiness of the inelastic fiber layer or to allow the fibers constituting the elastic fiber layer to emerge on the surface of the nonwoven fabric 10, which will deteriorate the feel to the touch of the stretch nonwoven fabric.

In the cases where the fibers of the inelastic fiber layer are entangled with the fibers of the elastic fiber layer 1, it is preferred that the entanglement is achieved only by a through-air technique.

Fiber entanglement by a through-air technique is preferably accomplished by properly adjusting the air blowing pressure, air velocity, weight and thickness of the fiber layers, and the running speeds of the fiber layers. The fibers of the inelastic fiber layer and those of the elastic fiber layer 1 cannot be entangled with each other simply by adopting the conditions generally employed in the manufacture of air-through nonwovens. As will be described later, stretch nonwoven fabric as aimed at in the invention can first be obtained by carrying out the through-air technique under specific conditions.

A through-air technique is generally performed by blowing air heated to a prescribed temperature through the thickness of a fibrous layer. In general cases, entanglement of the fibers and fusion bonding at the fiber intersections take place simultaneously. In the present embodiment, however, it is not essential that the fibers are fusion bonded at their intersections in each layer by the through-air technique. In other words, the through-air technique is necessary for having the fibers of the inelastic fiber layer enter the elastic fiber layer 1 or for having the fibers of the inelastic fiber entangled with the fibers of the elastic fiber layer 1 and for having the fibers of the inelastic fiber layer fusion bonded to the fibers of the elastic fiber layer 1. The direction of entrance of the fibers varies depending on the direction of passage of heated gas and the positional relation between the inelastic fiber layer and the elastic fiber layer. It is preferred that the inelastic fiber layer is converted by the through-air technique into an air-through nonwoven in which the constituent fibers are fusion bonded at their intersections.

As is apparent from the foregoing description, a preferred form of the stretch nonwoven fabric according to the present invention is a substantially inelastic air-through nonwoven fabric having in the inside of its thickness direction an elastic fiber layer 1 in which the constituent fibers maintain a fibrous form, with part of the fibers constituting the air-through nonwoven fabric being in the elastic fiber layer 1 and/or with part of the fibers constituting the elastic fiber layer 1 being in the air-through nonwoven fabric. In a more preferred form of the stretch nonwoven fabric, part of the fibers constituting the air-through nonwoven fabric are entangled with the fibers constituting the elastic fiber layer 1 only by a through-air technique. Since the elastic fiber layer 1 is confined in the inside of the air-through nonwoven fabric, the fibers of the elastic fiber layer 1 are substantially absent on the surface of the stretch nonwoven fabric. This is favorable in that the stretch nonwoven fabric is free from stickiness inherent to elastic fibers.

The elastic fiber layer 1 has the capability of extending under tension and contracting when released from the tension. When the elastic fiber layer 1 is 100% elongated in at least one direction parallel to its plane and then contracted, the residual strain is preferably 20% or less, more preferably 10% or less. It is desirable that the elastic fiber layer 1 has the recited residual strain in at least one of the MD and CD, particularly preferably in both the MD and CD.

The elastic fiber layer 1 is an aggregate of elastic fibers. However, the elastic fiber layer may contain a small proportion of inelastic fibers as long as the elastic stretchability of the elastic fiber layer 1 is not impaired. The elastic fibers may be continuous fibers or staple fibers. Methods of forming elastic fibers include a melt-blowing technique in which a molten resin is extruded through orifices and the extruded molten resin is drawn by hot air into fine fibers, a spun-bonding technique in which a half-molten resin is drawn by cool air or by mechanical drawing, and a blow-spinning technique, which is a kind of melt-spinning technique.

The elastic fiber layer 1 may have the form of a web or nonwoven fabric made of elastic fibers by, for example, a blow spinning, spun bonding or melt-blowing technique. The elastic fiber layer 1 is particularly preferably a web obtained by the blow-spinning technique.

The spinning blown technique is carried out using a spinning die having a spinning nozzle for extruding a molten polymer, a pair of hot air blowers placed near the tip of the nozzle in a face-to-face relationship symmetrically about the nozzle, and a pair of cool air blowers placed downstream of the hot air blowers in a facing relationship symmetrically about the nozzle. The spinning blown technique is advantageous in that stretchable fibers are formed easily because molten fibers are drawn successively by hot air and cold air. The spinning blown technique offers another advantage that a highly breathable nonwoven fabric can be obtained because, for one thing, the fibers are not too dense and, for another, stretchable fibers equivalent to the thickness of stable fibers can be formed. Furthermore, a web of continuous filaments can be obtained by the blow-spinning technique. A web of continuous filaments is extremely advantageous for use in the present embodiment because it is less liable to break when highly elongated and thus develops elasticity more easily than a stable fiber web.

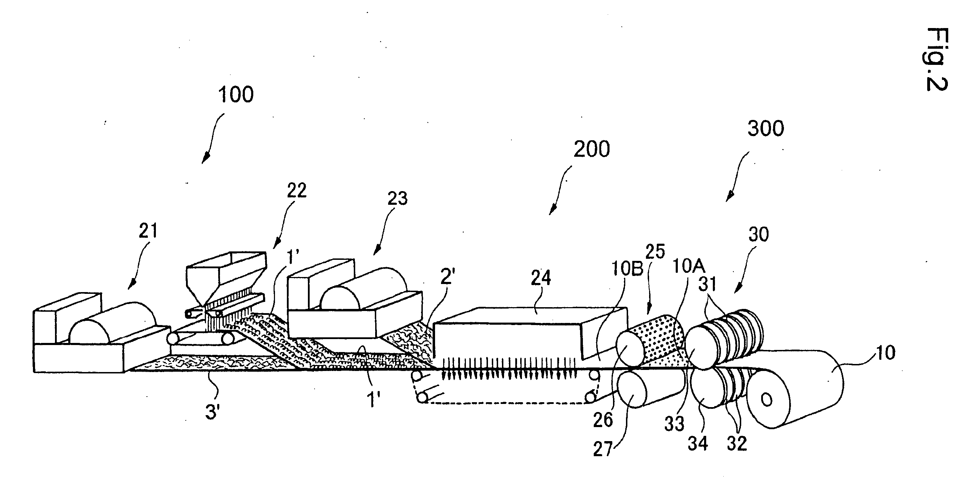

Examples of spinning dies that can be used in the spinning blown technique include the one illustrated in Fig. 1 of JP 43-30017B, the one illustrated in Fig. 2 of JP 62-90361A, and the one illustrated in Fig. 2 of JP 3-174008A. Those illustrated in Fig. 2 of U.S. Patent 5,098,636 and Figs. 1 to 3 of U.S. 2001/0026815A1. The teachings of these publications are incorporated herein by reference. The fibers spun from the spinning die are accumulated on a net conveyor.

The fibers that can be used to constitute the elastic fiber layer 1 include those made from thermoplastic elastomers or rubber. Thermoplastic elastomers are melt-spinnable using an extruder in the same manner as ordinary thermoplastic resins, and the fibers thus obtained are easy to fusion bond. Therefore, fibers of thermoplastic elastomers are particularly suited for making the stretch nonwoven fabric of the present embodiment that has air-through nonwoven as a basic structure. Examples of the thermoplastic elastomers include styrene elastomers such as SBS, SIS, SEBS, and SEPS, olefin elastomers, polyester elastomers, and polyurethane elastomers. These elastomers may be used either individually or in combination of two or more thereof. Sheath-core or side-by-side conjugate fibers composed of these resins are also useful. Fibers made from a styrene elastomer, an olefin elastomer or a combination thereof are particularly preferred in view of spinnability, stretch characteristics, and cost.

The inelastic fiber layers 2 and 3 are extensible but substantially inelastic. The term "extensible" as used herein is intended to include not only a fiber layer whose constituent fibers per se are extensible but also a fiber layer whose constituent fibers are not per se extensible but which totally shows extensibility as a result of debonding of constituent fibers that have been fusion bonded at their intersections, change of three-dimensional structures formed of a plurality of constituent fibers fusion-boded to one another, or breaks of the constituent fibers.

The fibers that can be used to constitute the inelastic fiber layers 2 and 3 include fibers of polyethylene (PE), polypropylene (PP), polyesters (PET and PBT), and polyamide. The fibers constituting the inelastic fiber layers 2 and 3 may be staple fibers or continuous fibers and hydrophilic or water repellent. Sheath-core or side-by-side conjugate fibers, dividual fibers, modified cross-section fibers, crimped fibers, and heat shrunken fibers are also useful. These fibers may be used either individually or in combination of two or more thereof. The inelastic fiber layers 2 and 3 may be a web or nonwoven fabric of continuous filaments or staple fiber. A web of staple fibers is preferred for providing thick and bulky inelastic fiber layers 2 and 3. The two inelastic fiber layers 2 and 3 may be either the same or different in material, weight per unit area, thickness and the like. In using sheath-core conjugate fibers, those having a PET or PP core and a low melting PET, PP or PE sheath are preferred; for they are strongly fusion-bonded to the fibers of the elastic fiber layer that preferably contains a styrene elastomer or an olefin elastomer or the like and hardly undergo delamination.

It is preferred that at least one of the two inelastic fiber layers 2 and 3 has a thickness 1.2 to 20 times, more preferably 1.5 to 5 times, the thickness of the elastic fiber layer 1. It is preferred that the elastic fiber layer 1 has a higher weight per unit area than at least one of the two inelastic fiber layers 2 and 3. That is, the inelastic fiber layer preferably has a larger thickness and a smaller weight than the elastic fiber layer. So related, the inelastic fiber layer is thicker and bulkier than the elastic fiber layer. It follows that the stretch nonwoven fabric 10 has a soft and pleasant feel to the touch.

The thickness of each of the inelastic fiber layers 2 and 3 is preferably 0.05 to 5 mm, more preferably 0.1 to 1 mm. The thickness of the elastic fiber layer 1 is preferably smaller than that of the inelastic fiber layers 2 and 3, specifically 0.01 to 2 mm, more preferably 0.1 to 0.5 mm. In measuring the thicknesses, a cut area of the stretch nonwoven fabric is observed under a microscope at a magnification of 50 to 200 times, and the thickness of each layer is measured to obtain an average of three fields for each layer.

The inelastic fiber layers 2 and 3 each preferably have a weight of 1 to 60 g/m², more preferably 5 to 15 g/m², in view of uniform coverage over the surface of the elastic fiber layer and residual strain. The elastic fiber layer 1 preferably has a larger weight than the inelastic fiber layers 2 and 3, specifically 5 to 80 g/m², more preferably 20 to 40 g/m², in view of stretch characteristics and residual strain.

The constituent fibers of the elastic fiber layer 1 preferably have a diameter 1.2 to 5 times, more preferably 1.2 to 2.5 times, the diameter of the fibers of at least one of the inelastic fiber layers 2 and 3. In addition to this, the fibers of the elastic fiber layer 1 preferably have a diameter of 5 µm or greater, more preferably 10 µm or greater, and of 100 µm or smaller, more preferably 40 µm or smaller, in view of air permeability and stretch characteristics. The fibers of the inelastic fiber layers 2 and 3 preferably have a diameter of 1 to 30 µm, more preferably 10 to 20 µm. That is, the inelastic fiber layers 2 and 3 are preferably made up of finer fibers than the elastic fiber layer 1, whereby the inelastic fiber layers 2 and 3 as outer layers of the nonwoven fabric 10 have an increased number of fusion bonds. An increase of fusion bonds is effective to prevent the stretch nonwoven fabric 10 from fuzzing. Using finer fibers in the outer layers provides the stretch nonwoven fabric 10 with a good feel to the touch.

The stretch nonwoven fabric 10 of the present embodiment has minute recesses formed on the inelastic fiber layers 2 and 3 as illustrated in Fig. 1. Therefore, microscopically the stretch nonwoven fabric 10 has a waving profile in a cross-sectional view. The waving profile is the result of stretching of the stretch nonwoven fabric 10 as will be described with respect to the process of production. The waving profile is the result of imparting stretchability to the stretch nonwoven fabric 10. To have a waving profile does not adversely affect the hand of the nonwoven fabric 10 but is rather beneficial for providing a softer and more agreeable nonwoven fabric.

While not illustrated in Fig. 1, the stretch nonwoven fabric 10 of the present embodiment may be an embossed nonwoven fabric. Embossing is for ensuring the bonding strength between the elastic fiber layer 1 and the inelastic fiber layers 2 and 3. Therefore, embossing is not essential as long as the elastic fiber layer 1 is sufficiently bonded with the inelastic fiber layers 2 and 3 by a through-air bonding technique. It should be noted that embossing causes the constituent fibers to be joined together but, unlike the through-air technique, does not entangle the constituent fibers with each other.

The stretch nonwoven fabric 10 of the present embodiment exhibits stretchability in at least one planar direction. It may have stretchability in every planar direction, in which case the stretchability may vary between different planar directions. The stretchability is preferably such that the load at 100% elongation is 20 to 500 cN/25 mm, more preferably 40 to 150 cN/25 mm, in the direction in which the stretch nonwoven fabric 10 is the most stretchable. The residual strain after 100% elongation is preferably 15% or less, more preferably 10% or less.

The stretch nonwoven fabric 10 of the present embodiment is useful in various applications such as surgical clothing and cleaning sheets owing to its good handresistance to fuzzing, stretchability, and breathability. It is especially useful as a constituent material of absorbent articles such as sanitary napkins and disposable diapers. For example, it is useful as a sheet defining the exterior surface of a disposable diaper or a sheet for elasticizing a waist portion, a below-waist portion, a leg opening portion, etc. It is also useful as a sheet forming stretchable wings of a sanitary napkin. It is applicable to any portion that is designed to be elasticized. The weight per unit area and thickness of the stretch nonwoven fabric are adjustable as appropriate to the intended use. For example, in application as a constituent material of an absorbent article, the stretch nonwoven fabric is preferably designed to have a weight of about 20 to 160 g/m² and thickness of about 0.1 to 5 mm. Since the fibers of the elastic fiber layer retain the fibrous form, the stretch nonwoven fabric of the present invention is flexible and highly breathable. The stretch nonwoven fabric of the invention preferably has a small bending stiffness, a measure of flexibility, specifically a bending stiffness of 10 g/30 mm or smaller, an air permeability of 16 m/(kPa·s) or more, and an elongation of 100% or more.

The bending stiffness is measured in accordance with JIS L1096 using a handle-o-meter (amount of deflection: 8 mm; slot width: 10 mm). "Handle" is measured in both the MD and CD to obtain an average. The air permeability is obtained as the reciprocal of the resistance to passage of air measured with an automatic air-permeability tester KES-F8-AP1 from Kato Tech.

A preferred process for producing the stretch nonwoven fabric 10 of the present embodiment will be described with reference to Fig. 2. Fig. 2 is a schematic illustration of apparatus preferably used to produce the stretch nonwoven fabric of the present embodiment. The apparatus illustrated in Fig. 2 has a web forming section 100, a hot air treatment section 200, and a stretching section 300 in the downstream order.

The web forming section 100 includes a first web forming unit 21, a second web forming unit 22, and a third web forming unit 23. A carding machine is used as the first web forming unit 21 and the third web forming unit 23. Any carding machine generally used in the art can be used with no particular limitation. A blow spinning machine is used as the second web forming unit 22. The blow spinning machine has a spinning die including a spinning nozzle for extruding a molten polymer, a pair of hot air blowers placed near the tip of the nozzle in a facing relationship symmetrically about the nozzle, and a pair of cool air blowers placed downstream of the hot air blowers in a facing relationship symmetrically about the nozzle.

The hot air treatment section 200 has a hot air oven 24 in which a gas heated to a prescribed temperature, particularly heated air is supplied. Three webs stacked on top of another are introduced into the hot air oven, where a heated gas is forced through the stack in the direction from the upper to lower sides and/or in the direction from the lower to upper sides.

The stretching section 300 has a weakly joining unit 25 and a stretching unit 30. The weakly joining unit 25 has a pair of embossing rollers 26 and 27. The weakly joining unit 25 is to ensure the unity of the webs of a fibrous sheet from the hot air treatment section 200. The stretching unit 30 is installed adjacent to and downstream of the weakly joining unit 25. The stretching unit 30 has a pair of corrugated rollers 33 and 34. The corrugated rollers 33 and 34 each consist of axially alternating large-diametered segments 31 and 32, respectively, and small-diameter segments (not shown) and are in a meshing engagement with each other. The fibrous sheet introduced into the nip between the corrugated rollers 33 and 34 is stretched in the axial direction of the rollers (the width direction of the sheet).

The stretch nonwoven fabric is produced by use of the apparatus having the above construction as follows. At first, webs of the same or different inelastic fibers are superposed on the respective sides of a web of elastic fibers. The web of elastic fibers may contain a small proportion of inelastic fibers in addition to elastic fibers as long as the elastic extensibility of the elastic fiber layer 1 is not impaired.

In more detail, inelastic staple fibers are carded in a carding machine 21 into an inelastic fiber web 3', which is continuously carried in one direction. An elastic resin is spun through the blow spinning die 22 into fibers, which are accumulated on a net conveyor to form an elastic fiber web 1' containing continuous filaments of the elastic resin. The elastic fiber web 1' is separated from the conveyor and superposed on the inelastic fiber web 3' moving from the carding machine 21 in one direction. Another inelastic fiber web 2' prepared in another carding machine 23 is superposed on the elastic fiber web 1'.

It is preferred that the inelastic fiber web 3' is temporarily fusion bonded by heat treatment or temporarily entangled, followed by direct accumulation of elastic fibers on the web by direct spinning. In this case, the elastic fibers have increased freedom, which helps the layers to have their fibers mutually enter by the action of air flow, etc. Temporary thermal fusion bonding is effected by means of, for example, heat rollers, pressure calender rollers, steaming, or through-air thermal bonding. Temporary entanglement is effected by, for example, needle punching or hydroentanglement. Use of heat rollers or through-air thermal bonding is preferred for retaining the hand of nonwoven fabric and for space saving reasons. It is preferred that the temporarily fusion bonded or entangled inelastic fiber web 3' is not taken up and that the elastic fibers are directly deposited thereon in the same line of production. If the inelastic fiber web 3' is once taken up, the web 3' can be collapsed by the winding pressure. The purpose of temporary fusion bonding or entanglement is to prevent the web 3' from being blown apart by air flow when the elastic fibers are melt spun and directly deposited thereon.

The stack of the three webs is sent to the through-air system hot air oven 24, where the stack is hot-air treated. By this hot air treatment, the fibers are fusion bonded at their intersections, whereby the elastic fiber web 1' is joined all over the entire area to the inelastic fiber webs 2' and 3'. It is necessary that the webs to be hot-air treated are not joined together in the stack in order to maintain each web in a thick and bulky state even after the hot air treatment and to provide the stretch nonwoven fabric with a pleasant feel to the touch. It should be noted here that the technique taught in U.S. Patent 4,107,364 includes the step of uniting a plurality of webs by hydroentanglement prior to hot air treatment, resulting in a failure to provide a bulky stretch nonwoven fabric. According to U.S. Patent 6,531,014, too, through-air thermal bonding is not applied but a plurality of webs are joined by heat sealing or ultrasonic sealing. It similarly follows that the resulting stretch nonwoven fabric is not bulky.

When the fibers are fusion bonded at their intersections by the hot air treatment thereby to unite the three webs all over the entire area, it is preferred to have part of the fibers constituting the inelastic fiber webs, mainly of those constituting the web 2' on the side to which hot air is blown, enter the elastic fiber web 1'. By controlling the conditions of the hot air treatment, it is preferred to have part of the fibers constituting the inelastic fiber web 2' enter the elastic fiber web 1' and become entangled with the fibers of the web 1', or it is preferred to have part of the fibers constituting the inelastic fiber web 2' penetrate through the elastic fiber web 1' into the inelastic fiber web 3', and become entangled with the fibers of the web 3'.

In order to have part of the fibers of the inelastic fiber web 2' enter the elastic fiber web 1' and/or to have part of the fibers of the elastic fiber web 1' enter the inelastic fiber web 2', the hot air treatment is preferably carried out at a hot air velocity of 0.4 to 3 m/s, a temperature of 80°C to 160°C, and a running speed of 5 to 200 m/min for a treating time of 0.5 to 10 seconds. The hot air velocity is preferably higher than that commonly employed in a through-air bonding technique, more preferably 1 to 2 m/s. To use a highly air-permeable net in the through-air system helps the fibers to enter. In the case where the elastic fiber web 1' is directly spun on the inelastic fiber web 3', the air blown in the spinning region similarly helps the fibers of the elastic fiber web 1' to enter the inelastic fiber web 3'. The nets that can be used in the hot air treatment and the direct spinning of the elastic fibers preferably have an air permeability of 250 to 800 cm³/(cm²·s), more preferably 400 to 750 cm³/(cm²·s). The above-recited conditions are also preferred in order to soften the fibers for facilitating uniform fiber entrance and fusion bonding. Having the fibers entangled can be achieved by applying hot air at a velocity of 3 to 5 m/s under a pressure of 0.1 to 0.3 kPa. The elastic fiber web 1' preferably has an air permeability of 8 m/(kPa·s) or more, more preferably 24 m/(kPa·s) or more. The recited air permeability secures effective flow of hot air through the web 1' thereby to allow the fibers to enter uniformly and to facilitate fusion bonding of the fibers thereby increasing the maximum strength and preventing fuzzing.

In the hot air treatment, it is desirable that the entrance of part of the fibers of the inelastic fiber web 2' into the elastic fiber web 1' takes place simultaneously with the fusion bonding of the fibers of the inelastic fiber web 2' and/or the fibers of the inelastic fiber web 3' to the fibers of the elastic fiber web 1' at their intersections. In this case, the hot air treatment is preferably performed under such conditions as to allow the elastic fibers to remain in a fibrous form after the hot air treatment. That is, it is preferred that the hot air treatment conditions are not such that change the fibers constituting the elastic fiber web 1' into a film-like structure or a film-like/fibrous mixed structure. In the hot air treatment, the fibers in each of the inelastic fiber web 2', the elastic fiber web 1', and the inelastic fiber web 3' are fusion bonded among themselves at their intersections.

As a result of the hot air treatment in a through-air system, a fibrous sheet 10B having the three webs united is obtained. The fibrous sheet 10B has a continuous length running in one direction with a given width. The fibrous sheet 10B is then forwarded to the stretching section 300. In the stretching section 300, the fibrous sheet 10B is first passed through the weakly joining unit 25, which is an embossing machine including a metallic embossing roller 26 having embossing projections regularly arranged on its peripheral surface and a metallic or resin back-up roller 27 facing to the embossing roller 26. The fibrous sheet 10B is heat embossed while passing through the weakly joining unit 25 to become an embossed fibrous sheet 10A. Since the webs introduced into the stretching section 300 have previously been united by the fusion bonding in the preceding hot air treatment section 200, the heat embossing by the weakly joining unit 25 is not essential in the present invention. The heat embossing by the weakly joining unit 25 is effective where it is demanded to ensure the integrity of the webs. Processing by the weakly joining unit 25 produces an additional advantage that the fibrous sheet 10A is made more resistant to fuzzing. It should be noted that the heat embossing joins the constituent fibers together but does not entangle the fibers with each other unlike the fusion bonding in a through-air system done in the hot air treatment section 200.

Since the heat embossing by the weakly joining unit 25 is auxiliary to the fusion bonding that has been done in the hot air treatment section 200, the embossing conditions may be relatively mild. Severe embossing conditions would rather impair the bulkiness of the fibrous sheet 10A and could cause the fibers to become cohesive film-like. This adversely affects the hand and breathability of the resulting stretch nonwoven fabric. Accordingly, the linear pressure applied in the heat embossing is preferably 50 to 600 N/cm, more preferably 100 to 400 N/cm, while varying depending on the thickness of the fibrous sheet 10B to be embossed. The temperature of the embossing roller is preferably 50°C to 160°C, more preferably 80°C to 130°C, while varying depending on the material of the fibers and the running speed of the fibrous sheet 10B.

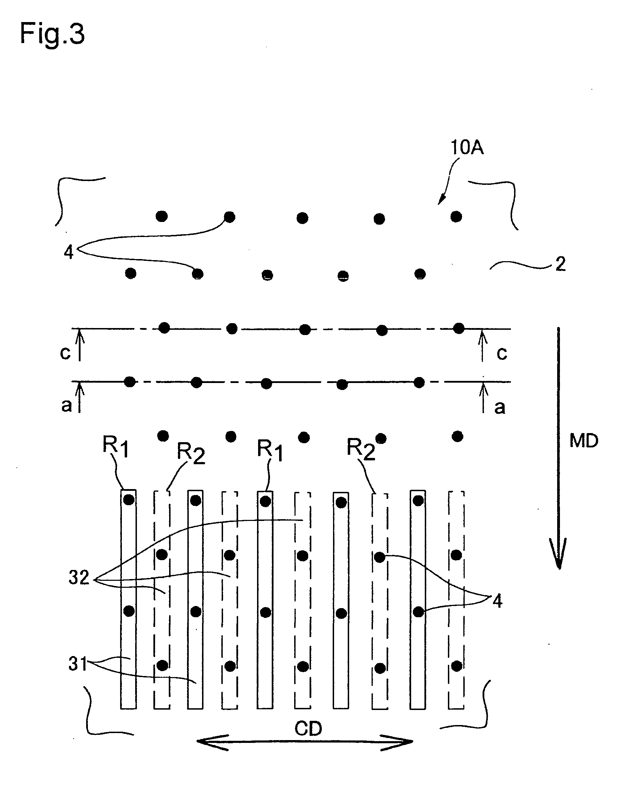

The fibrous sheet 10A thus obtained has a large number of bonds 4 discretely arranged in a regular pattern as illustrated in Fig. 3. The bonds 4 are arranged in a regular pattern. The bonds 4 are preferably arranged discretely in, for example, both the running direction (MD) and in the direction perpendicular to the running direction (i.e., CD).

The fibrous sheet 10A from the weakly joining unit 25 is then sent to the stretching unit 30. As illustrated in Figs. 2 to 4, the fibrous sheet 10A is introduced into the nip between the corrugated rollers 33 and 34 each consisting of axially alternating large-diametered segments 31 and 32, respectively, and small-diameter segments (not shown). The fibrous sheet 10A is thus stretched in the CD perpendicular to the running direction (MD).

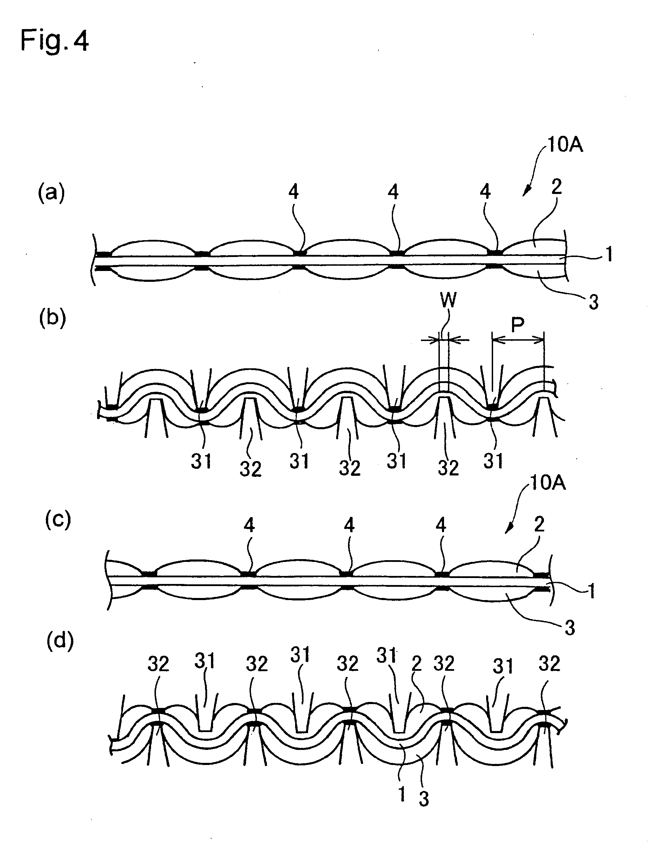

The stretching unit 30 has a known vertical displacement mechanism (not shown) for vertically displacing the axis of either one of or both of the corrugated rollers 33 and 34 to adjust the clearance between the rollers 33 and 34. As illustrated in Figs. 2, 4(a), and 4(d), the corrugated rollers 33 and 34 are configured such that the large-diameter segments 31 of the corrugated roller 33 fit with clearance into the recesses between every adjacent large-diameter segments 32 of the other corrugated roller 34 and such that the large-diameter segments 32 of the corrugated roller 34 fit with clearance into the recesses between every adjacent large-diameter segments 31 of the other corrugated roller 33. The fibrous sheet 10A is introduced into the nip between the so configured rollers 33 and 34 to be stretched.

In the stretching step, it is preferred that the lateral positions of the bonds 4 be coincident with those of the large-diameter segments 31 and 32 of the respective corrugated rollers 33 and 34 as illustrated in Figs. 3 and 4. Specifically, as illustrated in Fig. 3, the fibrous sheet 10A has straight lines of bonds (hereinafter "bond lines" (10 bond lines in Fig. 3) parallel to the MD, each line having the bonds 4 spacedly aligned in the MD. The positions of the large-diameter segments 31 of the corrugated roller 33 are coincident with the positions of the bonds 4 in every other bond line starting with the first bond line to the left in Fig. 3, designated R₁. The positions of the large-diameter segments 32 of the other corrugated roller 34 are coincident with the positions of the bonds 4 in every other bond line starting with the second bond line to the left, designated R₂. The regions indicated by numerals 31 and 32 in Fig. 3 are the regions of the fibrous sheet 10A that are to come into contact with the top face of the large-diameter segments 31 and 32 of the respective rollers at a point of time while the sheet 10A is passing between the corrugated rollers 33 and 34.

During the passage of the fibrous sheet 10A through the nip between the corrugated rollers 33 and 34, the bonds 4 come into contact with the large-diameter segments (31 or 32) of either one of the rollers 33 and 34, while the regions of the fibrous sheet 10A between the large-diameter segments (the regions that do not come into contact with the large-diameter segments) are positively stretched as illustrated in Figs. 4(b) and 4(d). Therefore, the regions of the fibrous sheet 10A other than the bonds can be stretched efficiently without being accompanied by breaks or delamination at the bonds 4. This stretching operation elongates the inelastic fiber layers 2 and 3 sufficiently to cause deformation that is not recovered even after the fibrous sheet 10A contracts as a whole. Being so deformed, the inelastic fiber layers 2 and 3 exhibit greatly lessened action to interfere with free expansion and contraction of the elastic fiber layer 1. Thus, the process described accomplishes efficient production of the stretch nonwoven fabric 10 exhibiting high stretchability and a good appearance with very few breaks or fuzzes.

By the above described stretching step, the thickness of the fibrous sheet 10A preferably increases to 1.1 to 4 times, more preferably 1.3 to 3 times, the thickness before the stretching. The fibers of the inelastic fiber layers 2 and 3 extend and become finer as a result of plastic deformation. At the same time, the inelastic fiber layers 2 and 3 become bulkier to provide better feel to the touch and cushioning.

For the fibrous sheet 10A before being stretched to have a smaller thickness is beneficial for saving the space for transportation and storage of the stock roller.

It is preferred that the stretching step is such that the bending stiffness of the fibrous sheet 10A is reduced to 30% to 80%, more preferably 40% to 70%, of the bending stiffness before the stretching operation thereby to provide soft and drapable nonwoven fabric. It is preferred for the fibrous sheet 10A before being stretched to have a high bending stiffness so that the fibrous sheet 10A may be prevented from wrinkling during the transfer and stretching operation.

The thickness and bending stiffness of the fibrous sheet 10A before and after the stretching operation can be controlled by the elongation of the fibers used to make the inelastic fiber layers 2 and 3, the embossing pattern of the embossing roller, the pitch and top face width of the large-diameter segments of the corrugated rollers 33 and 34, and the depth of engagement between the corrugated rollers 33 and 34.

The top face of the large-diameter segments 31 and 32 of the respective corrugated rollers 33 and 34 is preferably not sharply pointed so as not to damage the fibrous sheet 10A. It is preferably a flat face having a certain width as illustrated in Figs. 4(b) and 4(d). The top face width W of the large-diameter segments (see Fig. 4(b)) is preferably 0.3 to 1 mm and is preferably 0.7 to 2 times, more preferably 0.9 to 1.3 times, the size of the bonds 4 in the CD. With that configuration, a high strength sheet can be obtained without completely destroying the inelastic fibers.

The pitch P of the facing large-diameter segments of the two corrugated rollers in meshing engagement (see Fig. 4(b)) is preferably 0.7 to 2.5 mm. The pitch P is preferably 1.2 to 5 times, more preferably 2 to 3 times, the size of the bonds 4 in the CD. With that configuration, a cloth-like appearance and a good feel to the touch can be obtained. Although the pitch of the bonds 4 in the CD (the pitch of bond lines R₁ or R₂ in the CD) is basically double the pitch P of the facing large-diameter segments for positional coincidence, positional coincidence will be obtained as long as the former pitch falls within the range of from 1.6 to 2.4 times the latter pitch taking into consideration the elongation and neck-in of the fibrous sheet 10A in the CD.

On coming out of the stretching unit 30, the fibrous sheet 10A is released from the laterally stretched state, that is, the extension is relaxed. As a result, extensibility and contractibility develop in the fibrous sheet 10A, and the sheet 10A contracts in its width direction to become the desired stretch nonwoven fabric 10. When the fibrous sheet 10 is released from the stretched state, it may be released from the stretched state either completely or in a manner that the stretched state remains to some extent as long as extensibility and contractibility develop.

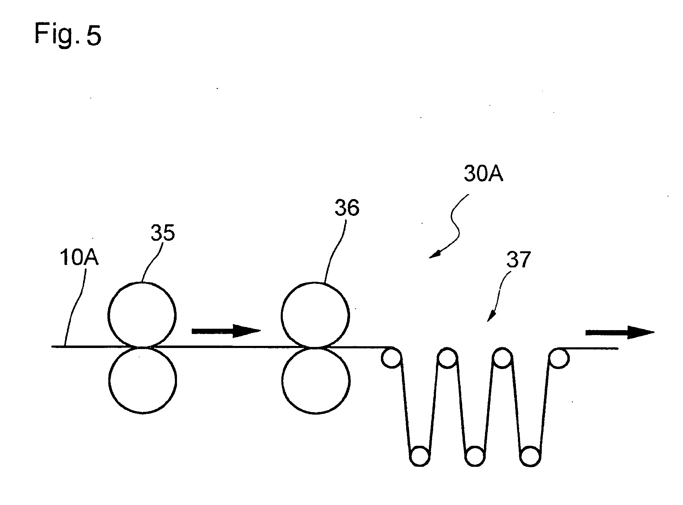

The stretching unit 30 shown in Fig. 2 may be replaced with a stretching unit 30A illustrated in Fig. 5. The stretching unit 30 of Fig. 5 operates to stretch the fibrous sheet 10A in the MD. The stretching unit 30A includes a first pair of stretching rollers 35 and a second pair of stretching rollers 36 in the downstream order. The first set of rollers 35 and the second set of rollers 36 have the same diameter but different peripheral linear speeds. The second set 36 operates at a higher peripheral linear speed than the first set 35 so that the fibrous sheet 10A is stretched in the MD between the two sets of rollers 35 and 36.

A set of dancer rollers 37 is provided downstream of the second set of stretching rollers 36, whereby the fibrous sheet 10A is released from the longitudinally stretched state, i.e., the extension is relaxed. As a result, the fibrous sheet 10A contracts in the longitudinal direction.

In the above described embodiment, the stretch nonwoven fabric 10 produced by the use of the apparatus shown in Fig. 2 is then fabricated to produce various articles having a stretch portion. That is, the line of producing the stretch nonwoven fabric and the line of producing articles are separate. Instead, it is possible to integrate the stretch nonwoven fabric production line with the article production line so that the production of the stretch nonwoven fabric and the production of the article may be performed in a continuous manner on the same assembly line. Specifically, a fibrous sheet 10A is produced by the processing through the web forming section 100, heat treatment section 200, and stretching section 300. The fibrous sheet 10A is then continuously fed while being in the stretched state to a processing machine for manufacturing articles with a stretch portion, such as the above described absorbent articles, surgical clothing, masks, and cleaning sheets, where the fibrous sheet 10A is subjected to prescribed processing operations, for example superposition or joining with other members. The fibrous sheet 10A is then released from the stretched state on the processing machine. When, for example, the fibrous sheet 10A is in a laterally stretched state, the sheet 10A is allowed to contract in its width direction and thus released from the stretched state. When the fibrous sheet 10A is in a longitudinally stretched state, the sheet 10A is cut at prescribed intervals in the longitudinal direction and thereby released from the stretched state. In that way, an article with a stretch portion having the stretch nonwoven fabric in a part thereof is produced.

In another embodiment of the process of producing an article, a precursor sheet material of stretch nonwoven fabric 10 is once taken up. The precursor sheet material is fed from the roller to an article production line, in which the sheet material is endowed with stretchability and further processed into a final product. More specifically, the fibrous sheet 10B prepared by the processing operations through the web forming section 100 and the heat treatment section 200 shown in Fig. 2 is once taken up. The roller of the fibrous sheet 10B is mounted on a separate processing machine for producing an article designed to have a stretch portion. This processing machine may be installed in a different site (e.g., in another building in the same factory site or in a distant place). The processing machine has a stretching unit. The taken-up fibrous sheet 10B is fed to the processing machine, where it is stretched and further subjected to necessary processing operations, for example superposition or joining with other members. The fibrous sheet is released from the stretched state on the same processing machine. An article with a stretch portion having the stretch nonwoven fabric in a part thereof is thus produced.

The present invention has been described with respect to its preferred embodiments, but it should be understood that the invention is not limited thereto. For example, while the stretch nonwoven fabric 10 of the foregoing embodiments consists of three layers; the elastic fiber layer 1 and two inelastic fibers layers 2 and 3, which have substantial inelasticity and may be the same or different, disposed on the respective sides of the elastic fiber layer 1, the stretch nonwoven fabric of the invention may have a dual layer structure consisting of an elastic fiber layer and an inelastic fiber layer disposed on one side of the elastic fiber layer. In applying the dual layered stretch nonwoven fabric as a constituent material of an absorbent article, particularly when used in a site that is to come into contact with the wearer's skin, the stretch nonwoven fabric is preferably used with its inelastic fiber layer side facing the wearer's skin to give a wearer stickiness-free comfort to the skin.

While, in the process illustrated in Fig. 4, the fibrous sheet 10A is stretched without being nipped between the large-diameter segments of one of the corrugated rollers and the small-diameter segments of the other corrugated roller, the clearance between the two corrugated rollers may be decreased so that the fibrous sheet 10A may be stretched as nipped between them. In other words, the large-diameter segments of one corrugated roller may be perfectly mated with the small-diameter segments of the other corrugated roller via the fiber sheet. The stretching step may be carried out by the method described in JP 6-133998A.

While in the foregoing embodiments, the elastic fiber web 1' is formed by the blow-spinning technique, it may be formed by the spun-bonding technique or, as in Example 4 given *infra,* the melt-blowing technique.

While the webs before being united in the hot air treatment section 200 are preferably free from bonds at the intersections of the constituent fibers, nonwoven fabric having its fibers previously bonded at their intersections may be used as a web as in Example 4.

While in the foregoing embodiments the fibrous sheet 10B is stretched in one of the longitudinal and lateral directions, it may be stretched in both the longitudinal and lateral directions.

### Example 1

Stretch nonwoven fabric illustrated in Fig. 1 was produced by the use of the apparatus illustrated in Fig. 2. Staple fibers (sheath: PE; core: PET) having a diameter of 17 µm and a length of 51 mm were fed to a carding machine to form a carded web as an inelastic fiber web 3'. The inelastic fiber web 3' had a weight of 10 g/m². An elastic fiber web 1' formed of continuous filaments was stacked on the inelastic fiber web 3'.

The elastic fiber web 1' was formed as follows. Craton G1657 (trade name), an elastic SEBS resin was used. The molten resin was extruded through a spinning nozzle at a die temperature of 310°C and blown by a blow-spinning technique to form an elastic fiber web 1' of continuous filaments on a net. The elastic fiber had a diameter of 32 µm. The web 1' had a weight of 40 g/m².

An inelastic fiber web 2' made of the same staple fibers as the web 3' and having a weight of 10 g/m² was stacked on the elastic fiber web 1'.

The stack of the three webs was introduced into the heat treatment unit, where hot air was blown to the stack in a through-air system. The hot air treatment was carried at a temperature (on the net) of 140°C, a hot air velocity of 2 m/s, and a blowing pressure of 0.1 kPa for a treating time of 15 seconds. The net had an air permeability of 500 cm³/(cm²·s). By the heat treatment a fibrous sheet 10B consisting of the three webs joined together was obtained.

The fibrous sheet 10B was then heat embossed using an embosser having an embossing roller and a flat metal roller. The embossing roller had a large number of raised dots at a pitch of 2.0 mm in the CD. The rollers were both set at 110°C. As a result of the heat embossing a fibrous sheet 10A having bonds in a regular pattern was obtained.

The fibrous sheet 10A was subjected to stretching using a stretching unit composed of a facing pair of corrugated rollers each having axially alternating large-diameter segments and small-diameter segments. The pitch of the large-diameter segments and that of the small-diameter segments on the same corrugated roller were both 2.0 mm (the pitch of the large-diameter segments of the two corrugated roller in meshing engagement was 1.0 mm). The depth of engagement of the two corrugated rollers was adjusted so as to stretch the fiber sheet 10A 3.5 times in the CD. As a result, nonwoven fabric weighing 60 g/m² and having stretchability in the CD was obtained. The transfer rate of the sheeting was 10 m/min in each of the above operations. The characteristics of the resulting stretch nonwoven fabric are shown in Table 1. The thickness and bending stiffness of the fiber sheet 10A before the stretching operation are shown in Table 2.

The measurements and evaluations were made in accordance with the following methods.

### (1) Thickness

The thickness of the stretch nonwoven fabric was measured after it was conditioned in an environment of 23±2°C and 60% RH for at least 2 days with no load applied. The so conditioned stretch nonwoven fabric was sandwiched in between a pair of plates to apply a load of 0.5 cN/cm² to the nonwoven fabric, and a cut area of the nonwoven fabric under load was observed under a microscope at a magnification of 25 to 200 times to obtain the average thickness of each fiber layer. The distance between the plates were measured to give the overall thickness of the nonwoven fabric. When the fibers mutually enter the adjoining fiber layers, the midpoint of the intermingling zone was taken as the interface of the layers.

### (2) Air permeability

The air permeability of the elastic fiber layer was measured on the elastic fiber layer alone before the heat treatment. The air permeability of the stretch nonwoven fabric was measured on the nonwoven fabric after the stretching step.

### (3) Fiber shedding test

A 200 mm by 200 mm specimen cut out of the stretch nonwoven fabric was placed on a plate with the side to be tested up and fixed thereto along its four sides with pressure-sensitive adhesive tape. A frictional plate having a sponge (Moltprene MF-30) wrapped therearound was set on the specimen to apply a load of 240 g to the specimen and given 15 cycles of turns, each cycle consisting of three clockwise turns followed by three counterclockwise turns, each turn taking 3 seconds. All the fibers clinging to the sponge were transferred to a pressure sensitive adhesive tape, and the adhesive tape was attached to black paper. The degree of fiber shedding was evaluated from the surface condition of the specimen and the fibers adhered to the adhesive tape and graded based on the following A to C scale.
A: Little fuzzing or pilling on the specimen. Little fiber on the adhesive tape.
B: Fuzzing or pilling on the specimen. No clusters of fibers on the adhesive tape.
C: Fuzzing or pilling on the specimen. Many clusters of fibers on the adhesive tape.

### (4) Strength, elongation, residual strain

A test specimen measuring 50 mm long along the stretchable direction and 25 mm along the direction perpendicular to the stretchable direction was cut out of the stretch nonwoven fabric. The specimen was set in Tensilon RTC1210A from Orientec Co., Ltd. The chuck distance was 25 mm. The specimen was elongated in the stretchable direction at a rate of 300 mm/min while recording the load. The maximum load needed was taken as a maximum strength. Taking the initial length of the specimen and the length of the specimen under the maximum load as A and B, respectively, the maximum elongation percentage was calculated from {(B-A)/A}x100. Further, the test specimen was subjected to a 100% elongation cycle test to obtain strength at 100% elongation from the load at 100% elongation. After 100% elongation, when the elongated specimen was returned to the original length at the same speed, the ratio of the residual elongation (the length that was not recovered) to the initial length was taken as a residual strain.

### (5) Bending stiffness

Bending stiffness was measured with HOM-3 manufactured by Daiei Kagaku Seiki Co., Ltd.

As a result of SEM observation of a cut surface of the stretch nonwoven fabric, it was found that the three fiber layers were all over joined together with the fibers of the elastic fiber layer fusion bonded to the fibers of the inelastic fiber layers. It was also confirmed that part of the fibers of the inelastic fiber layers entered the elastic fiber layer in the thickness direction and that the fibers of the elastic fiber layer maintained the fibrous form. The stretch nonwoven fabric had a good and soft hand and stretched well.
A disposable diaper was made using the stretch nonwoven fabric as an exterior sheet. The resulting diaper was soft to the touch and highly breathable. It stretched well, helping easy application. Since the diaper tightened the wearer's body as a whole, it hardly left indentations or marks on the wearer.

### Example 2

Stretch nonwoven fabric was produced in the same manner as in Example 1 with the following exceptions. The elastic resin used in Example 1 was replaced with Pandex T-1180N (trade name) from DIC-Bayer Polymer Co., Ltd., a thermoplastic polyurethane elastomer. The resin was extruded at a die temperature of 230°C and blown by a blow-spinning technique to form continuous elastic filaments having a diameter of 20 µm. The elastic fiber web 1' had a weight of 30 g/m². The characteristics of the resulting stretch nonwoven fabric are shown in Table 1. The thickness and bending stiffness of the fibrous sheet 10A before being stretched are shown in Table 2.

### Example 3

Stretch nonwoven fabric was produced in the same manner as in Example 1 with the following exceptions. The elastic resin used in Example 1 was replaced with a polyolefin elastomer EG8200 (trade name) from Dow Chemical and an SEBS elastic resin Craton G1657 (trade name). The resins were extruded at a die temperature of 320°C and blown by a blow-spinning technique to form continuous, elastic side-by-side conjugate fibers having a diameter of 23 µm. The weight ratio of the resins was 5:5. The elastic fiber web 1' had a weight of 20 g/m². The characteristics of the resulting stretch nonwoven fabric are shown in Table 1. The thickness and bending stiffness of the fibrous sheet 10A before being stretched are shown in Table 2.

### Example 4

Staple fibers (sheath: PE; core: PET) having a diameter of 18 µm and a length of 51 mm were fed to a carding machine to form a carded web as an inelastic fiber web 3'. The inelastic fiber web 3' was introduced into a heat treating unit where it was heat treated by a through-air bonding technique to temporarily fusion bond the constituent fibers. The temperature on the net was 137°C. There was thus obtained an inelastic fiber web 3' weighing 10 g/m² and having the constituent fibers temporarily fusion bonded to each other. An elastic fiber web 1' formed of continuous fibers was directly deposited on the inelastic fiber web 3'.

The elastic fiber web 1' was formed as follows. A styrene elastomer was used as an elastic resin. The molten resin was extruded through a spinning nozzle at a die temperature of 290°C and blown by a melt-blowing technique to form an elastic fiber web 1' directly on the inelastic fiber web 3'. The forming net had an air permeability of 420 cm³/(cm²·s). The elastic fiber had a diameter of 14 µm. The elastic fiber web 1' had a weight of 15 g/m².

An inelastic fiber web 2' made of the same staple fibers as the web 3' and weighing 10 g/m² was stacked on the elastic fiber web 1'. The web 2' did not have the constituent fibers temporarily fusion bonded.

The stack of the three webs was introduced into a heat treatment unit, where hot air was blown to the stack in a through-air system. The heat treatment was carried out at a temperature (on the net) of 137°C, a hot air velocity of 2 m/s, and a blowing pressure of 0.2 kPa for a treating time of 15 seconds. The net had an air permeability of 500 cm³/(cm²·s). By the heat treatment a fibrous sheet 10B consisting of the three webs joined together was obtained.

The fibrous sheet 10B was then heat embossed using an embosser having an embossing roller and a flat metal roller. The embossing roller had a large number of raised dots at a pitch of 2.0 mm in both the CD and MD. The rollers were both set at 120°C. As a result of the heat embossing a fibrous sheet 10A having bonds in a regular pattern was obtained. The fibrous sheet 10A was taken up into a roller of nonwoven fabric.

The fibrous sheet 10A was unrolled and stretched 3 times in the CD in the same manner as in Example 1 to provide a stretch nonwoven fabric. The characteristics of the resulting stretch nonwoven fabric are shown in Table 1. The thickness and bending stiffness of the fibrous sheet 10A before being stretched are shown in Table 2.

**Table 1**

| | | Example No. | | | |
|---|---|---|---|---|---|
| | | 1 | 2 | 3 | 4 |
| Thickness (mm) | Elastic fiber layer 1 | 0.15 | 0.15 | 0.10 | 0.10 |
| | Inelastic fiber layers 2/3 | 0.48/ 0.48 | 0.36/ 0.36 | 0.37/ 0.37 | 0.54/ 0.54 |
| | Stretch nonwoven fabric | 1.11 | 0.87 | 0.84 | 1.18 |
| Air permeability (m/(kPa·s))* | | 27 | 40 | 41 | 26 |
| Fiber shedding test | | A | A | A | A |
| Strength at 100% elongation (cN/25 mm) | | 40 | 68 | 85 | 102 |
| Maximum strength (cN/25 mm) | | 170 | 220 | 180 | 380 |
| Maximum elongation (%) | | 230 | 220 | 180 | 180 |
| Residual strain (%) | | 10 | 12 | 18 | 11 |
| Bending stiffness (g/30 mm) | | 1.6 | 1.5 | 1.5 | 1.2 |

| | | | | | |
|---|---|---|---|---|---|
| * The air permeability of the elastic fiber layer 1 of Example 1 was 30 m/(kPa·s). | | | | | |

**Table 2**

| Before Stretching | | Example No. | | | |
|---|---|---|---|---|---|
| | | 1 | 2 | 3 | 4 |
| Thickness (mm) | Elastic fiber layer 1 | 0.15 | 0.15 | 0.10 | 0.10 |
| | Inelastic fiber layers 2/3 | 0.24/ 0.24 | 0.26/ 0.26 | 0.28/ 0.28 | 0.24/ 0.24 |
| | Fibrous sheet | 0.62 | 0.66 | 0.66 | 0.58 |
| Bending stiffness (g/30 mm) | | 2.8 | 2.4 | 1.9 | 2.1 |

### Industrial Applicability

The stretch nonwoven fabric of the present invention is thick and bulky and has a soft hand and sufficient breathability. Having no elastic fibers exposed on the surface, the stretch nonwoven fabric is free from stickiness, which further improves the hand. The nonwoven fabric is prevented from fuzzing.

The processes of the present invention produce with ease thick and bulky stretch nonwoven fabric having a good hand and sufficient breathability and an article having the stretch nonwoven fabric. The processes of the invention produce with ease stretch nonwoven fabric free from stickiness inherent to an elastic material and an article having the stretch nonwoven fabric. The processes of the invention produce with ease stretch nonwoven fabric which is light-weight and stretches well and an article having the stretch nonwoven fabric.

## Claims

1. A stretch nonwoven fabric comprising an elastic fiber layer and two inelastic fiber layers having inelasticity on respective sides of the elastic fiber layer,
the elastic fiber layer and the inelastic fiber layers being joined together over the entire area by fusion bonding at fiber intersections,
fibers constituting the elastic fiber layer being in a fibrous form, and
the inelastic fiber layers having part of the fibers thereof enter the elastic fiber layer and/or the elastic fiber layer having part of the fibers thereof enter the inelastic fiber layers,
wherein the stretch nonwoven fabric has a waving profile in a cross-sectional view.

2. The stretch nonwoven fabric according to claim 1, wherein at least one inelastic fiber layer has a thickness 1.2 to 20 times the thickness of the elastic fiber layer, and the elastic fiber layer has a higher weight per unit area than at least one inelastic fiber layer.

3. The stretch nonwoven fabric according to claim 1 or 2, wherein the diameter of fibers of the elastic fiber layer is 1.2 to 5 times the diameter of fibers of at least one inelastic fiber layer and ranges from 10 to 100 µm.

4. The stretch nonwoven fabric according to any one of claims 1 to 3, wherein fibers of the elastic fiber layer comprise a thermoplastic elastomer.

5. The stretch nonwoven fabric according to claim 4, wherein the thermoplastic elastomer comprises a styrene elastomer, a polyolefin elastomer, a polyester elastomer or a polyurethane elastomer.

6. The stretch nonwoven fabric according to any one of claims 1 to 5, wherein at least one inelastic fiber layer comprises staple fibers.

7. A process of producing a stretch nonwoven fabric comprising the steps of:
stacking a web comprising elastic fibers and a web comprising inelastic fibers on each other,
applying hot air to the stack of the webs by a through-air system, at a hot air velocity of 0.4 to 3 m/s, a temperature of 80°C to 160°C, and a running speed of 5 to 200m/min for a treating time of 0.5 to 10 seconds, while the webs are in a non-united state to obtain a fibrous sheet having the webs united together by fusion bonding of the fibers,
stretching the fibrous sheet in at least one direction, and releasing the fibrous sheet from the stretched state.

8. The process according to claim 7, wherein the step of applying hot air by a through-air system is carried out under conditions such that the elastic fibers remain in the fibrous form thereafter.

9. The process according to claim 7 or 8, wherein the step of stretching is carried out by introducing the fibrous sheet into the nip of corrugated rollers each having axially alternating large-diametered segments and small-diameter segments and being in a meshing engagement with each other.

10. The process according to any one of claims 7 to 9, wherein the web comprising elastic fibers is formed by a blow-spinning technique.

11. A process of producing an article having a stretch portion comprising the steps of:
stacking a web comprising elastic fibers and a web comprising inelastic fibers on each other,
applying hot air to the stack of the webs in a through-air system, at a hot air velocity of 0.4 to 3 m/s, a temperature of 80°C to 160°C, and a running speed of 5 to 200m/min for a treating time of 0.5 to 10 seconds, while the webs are in a non-united state to obtain a fibrous sheet having the webs united together by fusion bonding of fibers,
stretching the fibrous sheet in at least one direction,
transferring the fibrous sheet in the stretched state to a processing machine for producing an article having a stretch portion,
applying a prescribed processing operation to the fibrous sheet on the processing machine, and releasing the fibrous sheet from the stretched state on the processing machine.

12. A process of producing an article having a stretch portion comprising the steps of:
stacking a web comprising elastic fibers and a web comprising inelastic fibers on each other,
applying hot air to the stack of the webs by a through-air system, at a hot air velocity of 0.4 to 3 m/s, a temperature of 80°C to 160°C, and a running speed of 5 to 200m/min for a treating time of 0.5 to 10 seconds, while the webs are in a non-united state to obtain a fibrous sheet having the webs united together by fusion bonding of fibers,
taking up the fibrous sheet,
feeding the taken-up fibrous sheet to a processing machine for producing an article having a stretch portion,
applying a prescribed processing operation comprising the substep of stretching the fibrous sheet in at least one direction on the processing machine, and releasing the fibrous sheet from the stretched state on the processing machine.

## Patentansprüche

1. Stretchvliesstoff mit einer elastischen Faserschicht und zwei unelastischen Faserschichten, die Inelastizität aufweisen, beiderseits der elastischen Faserschicht, wobei
die elastische Faserschicht und die unelastischen Faserschichten **dadurch**, dass an Faserkreuzungspunkten Fasern miteinander verschmolzen sind, über die gesamte Fläche miteinander verbunden sind,
Fasern, aus denen die elastische Faserschicht besteht, faserförmig sind, und
Teile der Fasern der unelastischen Faserschichten in die elastische Faserschicht eindringen und/oder Teile der Fasern der elastischen Faserschicht in die unelastischen Faserschichten eindringen,
wobei der Stretchvliesstoff, im Querschnitt betrachtet, ein welliges Profil hat.

2. Stretchvliesstoff nach Anspruch 1, wobei mindestens eine der unelastischen Faserschichten eine Dicke hat, die 1,2 bis 20 Mal die Dicke der elastischen Faserschicht ist, und die elastische Faserschicht ein höheres Gewicht pro Flächeneinheit hat als mindestens eine der unelastischen Faserschichten.

3. Stretchvliesstoff nach Anspruch 1 oder 2, wobei der Durchmesser der Fasern der elastischen Faserschicht 1,2 bis 5 Mal der Durchmesser der Fasern mindestens einer der unelastischen Faserschichten ist und zwischen 10 und 100µm beträgt.

4. Stretchvliesstoff nach einem der Ansprüche 1 bis 3, wobei Fasern der elastischen Faserschicht ein thermoplastisches Elastomer aufweisen.

5. Stretchvliesstoff nach Anspruch 4, wobei das thermoplastische Elastomer ein Styrol-Elastomer, ein Polyolefin-Elastomer, ein Polyester-Elastomer oder ein Polyurethan-Elastomer aufweist.

6. Stretchvliesstoff nach einem der Ansprüche 1 bis 5, wobei mindestens eine der unelastischen Faserschichten Zellstoff-Fasern aufweist.

7. Verfahren zur Herstellung eines Stretchvliesstoffs mit den folgenden Schritten:
Aufeinanderstapeln eines Gewebes, das elastische Fasern aufweist, und eines Gewebes, das unelastische Fasern aufweist,
Anwenden von Heißluft auf den Gewebestapel mit Hilfe eines Durchluftsystems bei einer Heißluftgeschwindigkeit von 0,4 bis 3m/s, einer Temperatur von 80°C bis 160°C und einer Laufgeschwindigkeit von 5 bis 200m/min für eine Behandlungszeit von 0,5 bis 10 Sekunden, während die Gewebe in einem nichtverbundenen Zustand sind, um ein Fasergebilde zu erzielen, dessen Gewebe **dadurch**, dass die Fasern miteinander verschmolzen sind, miteinander verbunden sind,
Dehnen des Fasergebildes in mindestens eine Richtung und Lösen des Fasergebildes aus dem gedehnten Zustand.

8. Verfahren nach Anspruch 7, wobei der Schritt der Anwendung von Heißluft mit Hilfe eines Durchluftsystems unter solchen Bedingungen durchgeführt wird, dass die elastischen Fasern danach faserförmig bleiben.

9. Verfahren nach Anspruch 7 oder 8, wobei der Schritt der Dehnung **dadurch** erfolgt, dass das Fasergebilde in den Spalt von Profilwalzen eingeführt wird, von denen jede axial abwechselnd Segmente mit großem Durchmesser und Segmente mit kleinem Durchmesser aufweist und die ineinander greifen.

10. Verfahren nach einem der Ansprüche 7 bis 9, wobei das Gewebe, das elastische Fasern aufweist, durch ein Blas-SpinnVerfahren hergestellt ist.

11. Verfahren zur Herstellung eines Artikels, der einen Stretchabschnitt aufweist, mit den folgenden Schritten:
Aufeinanderstapeln eines Gewebes, das elastische Fasern aufweist, und eines Gewebes, das unelastische Fasern aufweist,
Anwenden von Heißluft auf den Gewebestapel mit Hilfe eines Durchluftsystems bei einer Heißluftgeschwindigkeit von 0,4 bis 3m/s, einer Temperatur von 80°C bis 160°C und einer Laufgeschwindigkeit von 5 bis 200m/min für eine Behandlungszeit von 0,5 bis 10 Sekunden, während die Gewebe in einem nichtverbundenen Zustand sind, um ein Fasergebilde zu erzielen, dessen Gewebe **dadurch**, dass die Fasern miteinander verschmolzen sind, miteinander verbunden sind,
Dehnen des Fasergebildes in mindestens eine Richtung,
Übertragen des Fasergebildes im gedehnten Zustand zu einer Fertigungsanlage zur Herstellung eines Artikels, der einen Stretchabschnitt aufweist,
Anwenden eines vorgegebenen Fertigungsschritts auf das Fasergebilde an der Fertigungsanlage und Lösen des Fasergebildes aus dem gedehnten Zustand an der Fertigungsanlage.

12. Verfahren zur Herstellung eines Artikels, der einen Stretchabschnitt aufweist, mit den folgenden Schritten:
Aufeinanderstapeln eines Gewebes, das elastische Fasern aufweist, und eines Gewebes, das unelastische Fasern aufweist,
Anwenden von Heißluft auf den Gewebestapel mit Hilfe eines Durchluftsystems bei einer Heißluftgeschwindigkeit von 0,4 bis 3m/s, einer Temperatur von 80°C bis 160°C und einer Laufgeschwindigkeit von 5 bis 200m/min für eine Behandlungszeit von 0,5 bis 10 Sekunden, während die Gewebe in einem nichtverbundenen Zustand sind, um ein Fasergebilde zu erzielen, dessen Gewebe **dadurch**, dass die Fasern miteinander verschmolzen sind, miteinander verbunden sind,
Aufnehmen des Fasergebildes,
Zuführen des aufgenommenen Fasergebildes zu einer Fertigungsanlage zur Herstellung eines Artikels, der einen Stretchabschnitt aufweist,
Anwenden eines vorgegebenen Fertigungsschritts, der die folgenden Hilfsschritte aufweist: Dehnen des Fasergebildes in mindestens eine Richtung an der Fertigungsanlage und Lösen des Fasergebildes aus dem gedehnten Zustand an der Fertigungsanlage.

## Revendications

1. Tissu extensible non tissé comprenant une couche de fibres élastiques et deux couches de fibres non élastiques ayant une inélasticité sur les côtés respectifs de la couche de fibres élastiques,
la couche de fibres élastiques et les couches de fibres non élastiques étant reliées par liaison par fusion au niveau d'intersections de fibres sur la surface entière,
les fibres constituant la couche de fibres élastiques se présentant sous forme fibreuse, et
les couches de fibres non élastiques ayant une partie de leurs fibres qui pénètrent dans la couche de fibres élastiques et/ou la couche de fibres élastiques ayant une partie de ses fibres qui pénètrent dans les couches de fibres non élastiques,
dans lequel le tissu extensible non tissé a un profil d'ondulation sur une vue en coupe transversale.

2. Tissu extensible non tissé selon la revendication 1, dans lequel au moins une couche de fibres non élastiques a une épaisseur faisant de 1,2 à 20 fois l'épaisseur de la couche de fibres élastiques, et la couche de fibres élastiques a un poids par unité de surface supérieur à celui d'au moins une couche de fibres non élastiques.

3. Tissu extensible non tissé selon la revendication 1 ou 2, dans lequel le diamètre de fibres de la couche de fibres élastiques fait de 1,2 à 5 fois le diamètre de fibres d'au moins une couche de fibres non élastiques et est compris entre 10 à 100 µm.

4. Tissu extensible non tissé selon l'une quelconque des revendications 1 à 3, dans lequel les fibres de la couche de fibres élastiques comprennent un élastomère thermoplastique.

5. Tissu extensible non tissé selon la revendication 4, dans lequel l'élastomère thermoplastique comprend un élastomère de styrène, un élastomère de polyoléfine, un élastomère de polyester ou un élastomère de polyuréthane.

6. Tissu extensible non tissé selon l'une quelconque des revendications 1 à 5, dans lequel au moins une couche de fibres non élastiques comprend des fibres discontinues.

7. Processus de production d'un tissu extensible non tissé comprenant les étapes consistant à :
empiler une bande comprenant des fibres élastiques et une bande comprenant des fibres non élastiques l'une sur l'autre,
appliquer de l'air chaud à la pile des bandes par un système à air traversant, à une vitesse d'air chaud de 0,4 à 3 m/s, à une température de 80°C à 160°C, et à une vitesse de déplacement de 5 à 200 m/min pour une durée de traitement de 0,5 à 10 secondes, tandis que les bandes se trouvent dans un état non uni afin d'obtenir une feuille fibreuse ayant les bandes mutuellement unies par liaison par fusion des fibres,
étirer la feuille fibreuse dans au moins une direction, et libérer la feuille fibreuse de l'état étiré.

8. Processus selon la revendication 7, dans lequel l'étape d'application d'air chaud par un système à air traversant est réalisée dans des conditions telles que les fibres élastiques restent ensuite sous la forme fibreuse.

9. Processus selon la revendication 7 ou 8, dans lequel l'étape d'étirement est réalisée par l'introduction de la feuille fibreuse dans l'espace de pincement de rouleaux ondulés comportant chacun des segments de grand diamètre et des segments de petit diamètre agencés en alternance axiale et se trouvant en mise en prise mutuelle par emboîtement.

10. Processus selon l'une quelconque des revendications 7 à 9, dans lequel la bande comprenant des fibres élastiques est formée par une technique de filage par soufflage.

11. Processus de production d'un objet comportant une partie extensible comprenant les étapes consistant à :
empiler une bande comprenant des fibres élastiques et une bande comprenant des fibres non élastiques l'une sur l'autre,
appliquer de l'air chaud à la pile des bandes dans un système à air traversant, à une vitesse d'air chaud de 0,4 à 3 m/s, à une température de 80°C à 160°C, et à une vitesse de déplacement de 5 à 200 m/min pour une durée de traitement de 0,5 à 10 secondes, tandis que les bandes se trouvent dans un état non uni afin d'obtenir une feuille fibreuse ayant les bandes mutuellement unies par liaison par fusion des fibres,
étirer la feuille fibreuse dans au moins une direction,
transférer la feuille fibreuse dans l'état étiré jusqu'à une machine de traitement pour produire un objet comportant une partie extensible,
appliquer une opération de traitement prescrite à la feuille fibreuse sur la machine de traitement, et libérer la feuille fibreuse de l'état étiré sur la machine de traitement.

12. Processus de production d'un objet comportant une partie extensible comprenant les étapes consistant à :
empiler une bande comprenant des fibres élastiques et une bande comprenant des fibres non élastiques l'une sur l'autre,
appliquer de l'air chaud à la pile des bandes par un système à air traversant, à une vitesse d'air chaud de 0,4 à 3 m/s, à une température de 80°C à 160°C, et à une vitesse de déplacement de 5 à 200 m/min pour une durée de traitement de 0,5 à 10 secondes, tandis que les bandes se trouvent dans un état non uni afin d'obtenir une feuille fibreuse ayant les bandes mutuellement unies par liaison par fusion des fibres,
reprendre la feuille fibreuse,
acheminer la feuille fibreuse reprise jusqu'à une machine de traitement pour produire un objet comportant une partie extensible,
appliquer une opération de traitement prescrite comprenant la sous-étape consistant à étirer la feuille fibreuse dans au moins une direction sur la machine de traitement, et à libérer la feuille fibreuse de l'état étiré sur la machine de traitement.
